# EUROPÄISCHE PATENTSCHRIFT

(11) **EP 0 526 733 B1**
(45) Veröffentlichungstag und Bekanntmachung des Hinweises auf die Patenterteilung: **07.05.1997**
(21) Anmeldenummer: 92110983.1
(22) Anmeldetag: 29.06.1992
(51) Int. Cl.: B29B 17/00, B01F 3/00

(54) **Verfahren zur Aufbereitung von Kunststoffmischungen**
Method for the preparation of polymer mixtures
Procédé pour la préparation de mélanges de polymères

(30) Priorität: 05.07.1991 DE 4122382
(43) Veröffentlichungstag der Anmeldung: 10.02.1993
(73) Patentinhaber: Helling, Wilhelm, 49176 Hilter (DE)
(72) Erfinder: Helling, Wilhelm, 49176 Hilter (DE)
(74) Vertreter: Winkler, Andreas, Dr.

(56) Entgegenhaltungen:
- EP-A- 0 334 420
- WO-A-90/05759
- DE-A- 2 128 175
- DE-A- 2 900 666
- FR-A- 2 258 414
- FR-A- 2 280 492
- Proceedings ANTEC 91, Montreal, 5-9 May 1991 S. FELLAHI ET AL. 'Additives as properties improvers for recycled mixed plastics' page 2170 to 2174
- Proceedings ANTEC 90, Dallas, 7-11 May 1990 R.C.KOWALSKI 'Future trends in extruder reactions' page 1902 to 1904
- DATABASE WPI Section Ch, Week 34, Derwent Publications Ltd., London, GB; Class A, AN 73-47676U & JP-B-51 047 180 (JAPAN STEEL) 14. Dezember 1976
- DATABASE WPIL Section Ch, Week 16, Derwent Publications Ltd., London, GB; Class A, AN 88-108864 & JP-A-63 057 643 (NIPPON OILS & FATS) 12. März 1988

## Beschreibung

Die Erfindung betrifft ein Verfahren zur Aufbereitung einer Kunststoffmischung gemäß dem Oberbegriff von Anspruch 1.

Gemische aus Kunststoffen, die an sich im Hinblick auf eine Weiterverarbeitung in formgebenden Prozessen, wie z.B. durch Extrusion, unverträglich sind und daher bisher zu Produkten geführt haben, die nur geringen physikalischen und mechanischen Anforderungen genügen konnten und daher ausschließlich in Bereichen verwendet wurden, in denen keine hohen Qualitätsanforderungen gestellt werden, fallen insbesondere im Rahmen des ständig an Bedeutung gewinnenden Recyclings von Kunststoffen aus Haushalts- und Gewerbemüll an.

Aus der Druckschrift FR-A-2 258 414 ist ein gattungsgemäßes Verfahren zur Aufbereitung von Plastikmaterialien, insbesondere aus Thermoplasten, bekannt, gemäß dem den Plastikmaterialien eine zusätzliche mineralische und/oder organische Charge, wie Holzspäne, Holzfüller, Amiantpuder, Amiantfasern, Torf, Schwefel, Kieselerde, Sand, Graphit, Metallspäne, Asche aus Hausabfällen sowie duroplastische Materialien, zugeführt wird, um ein einfaches, kostengünstiges und zuverlässiges Gemisch zu erhalten.

Der Erfindung liegt die Aufgabe zugrunde, das gattungsgemäße Verfahren derart weiterzuentwickeln, daß die Aufbereitung von Kunststoffmischungen, die bisher nicht recyclingfähig waren oder nur zu Produkten minderwertiger Qualität weiterverarbeitet werden konnten, zu einem Kunststoffgemisch ermöglicht wird, das zu Produkten verarbeitet werden kann, die hohen physikalischen und/oder mechanischen Anforderungen genügen.

Erfindungsgemäß wird diese Aufgabe durch die Merkmale des Anspruchs 1 gelöst.

Die Unteransprüche 2 bis 15 beschreiben bevorzugte Ausführungsformen gemäß der Erfindung.

Mit dem erfindungsgemäßen Verfahren ist es erstmals gelungen, die üblicherweise im Hinblick auf die vertretenen Kunststoffsorten sehr heterogenen Kunststoffmischungen, die aus Haushalts- oder Gewerbemüll aussortiert werden können, so zu veredeln, daß sie einem Anforderungsprofil entsprechen, wie es bisher nur durch Neumaterial erreicht werden konnte. Dabei ist auch von besonderem Vorteil, daß es durch Zusatz besonderer Stoffe oder Stoffzusammensetzungen zusätzlich gelingt, die physikalischen und/oder mechanischen Eigenschaften bzw. die Oberflächenbearbeitbarkeit der aus den erfindungsgemäßen Gemischen herstellbaren Produkte gezielt auf ein bestimmtes Anforderungsprofil einzustellen.

Eine wesentliche Erkenntnis der Erfindung liegt darin, daß es zur Herstellung eines weiterverarbeitbaren Gemisches üblicherweise nicht ausreicht, das gesamte Kunststoffmaterial zu einem Pulver zu zermahlen, um dadurch ein möglichst homogenes Gemisch zu erreichen, da durch diese unspezifizierte Zerkleinerung des Materials die physikalischen und/oder chemischen Strukturen der Komponenten so stark geschädigt werden, daß die aus dem Gemisch herstellbaren Produkte nicht den gewünschten Anforderungsprofilen entsprechen können.

Überraschenderweise hat sich nun herausgestellt, daß erst dann ein in einem Recyclingprozeß tatsächlich sinnvoll einsetzbares aufbereitetes Kunststoffgemisch erzeugt werden kann, wenn in einer ersten Stufe ein Teil aus hinsichtlich der chemischen Stoffgruppe im wesentlichen einheitlichen Kunststoffen abgetrennt und später als eine Art Matrixmaterial verwendet wird, während es zur Erzielung einer homogenen Gleichverteilung im Gemisch ausreicht, einen weiteren bzw. den restlichen Teil der Ausgangsmischung fein zu zerkleinern oder durch Aufbringen einer Beschichtung an der Oberfläche zu verändern und dem Matrixmaterial anschließend als eine Art Füllstoff wieder zuzuführen.

Besonders gute Ergebnisse werden erzielt, wenn dem Gemisch noch sogenannte Compatibilizer zugesetzt werden, d.h. Substanzen, die die an sich unverträglichen Kunststoffe durch Anbindung über reaktionsfähige Endgruppen verträglich machen, d.h sie direkt oder indirekt bei Weiterverarbeitung in einem formgebenden Prozeß, wie z.B. bei Extrusion, miteinander verknüpfen, um so zu einem in sich weitgehend einheitlichen Endprodukt zu gelangen. Die Auswahl dieser Compatibilizer sowie der zuzusetzenden Mengen an diesen Stoffen oder Stoffzusammensetzungen ermöglicht es, die physikalischen und/oder mechanischen Eigenschaften der aus dem entsprechenden Gemisch herstellbaren Endprodukte gezielt zu steuern, d.h. Produkte mit einer definierten Reißfestigkeit, Bruchdehnung, Oberflächenreaktivität usw. herzustellen.

Für den Fall, daß der erste Teil der aufzubereitenden Kunststoffmischung, der zunächst abgetrennt wird, im wesentlichen aus Polyolefinen besteht, sollte dieser vor einer erneuten Zusammenführung mit dem restlichen Teil der Mischung, der zwischenzeitlich weiterbearbeitet wird, wie z.B. durch Zermahlen und/oder Beschichten, in einem Agglomerator angeschmolzen und zu Kügelchen verformt werden, um das Mischungsverhalten im daran anschließenden Schritt zu verbessern.

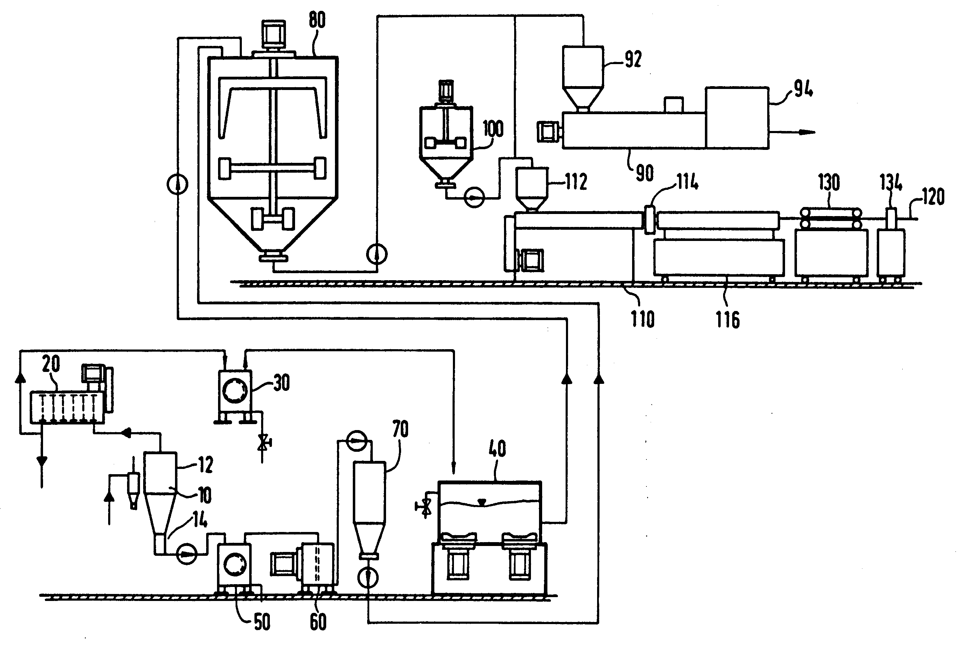

Weitere Merkmale und Vorteile der Erfindung ergeben sich aus dem im folgenden beschriebenen Ausführungsbeispiel der Erfindung, das an Hand der beiliegenden Zeichnung näher erläutert wird. Dabei zeigt die einzige Darstellung die wesentlichen Stationen eines im Rahmen der vorliegenden Erfindung besonders bevorzugten Verfahrens einschließlich beispielhafter Möglichkeiten zur Weiterverarbeitung des damit herstellbaren Kunststoffgemisches.

Als Beispiel für eine Ausgangsmischung für das erfindungsgemäße Aufbereitungsverfahren wird eine aus Haushalts- und/oder Gewerbemüll erhaltene Mischung eingesetzt. Das in einem ersten Schritt einer manuellen Separation von anderen Müllbestandteilen, wie Glas, Metall, Brennstoffen, usw., abgetrennte Roh-Recyclat wird dabei zunächst in einer Ballenpresse verdichtet, vorzerkleinert, in einem Metallsuchgerät von metallischen Bestandteilen gereinigt und über einen Vorwäscher, eine Naßmühle, einen Friktionswäscher und einen Turbowäscher weitgehend von Schmutzpartikeln befreit. An dieser Stelle soll noch einmal darauf hingewiesen werden, daß im erfindungsgemäßen Verfahren selbstverständlich nicht nur gereinigte Kunststoffmischungen aus Haushalts- und Gewerbemüll eingesetzt werden können, sondern auch speziell zusammengestellte Kunststoffmischungen aus Neumaterial.

Bezugnehmend nunmehr auf die zeichnerische Darstellung der wesentlichen Stationen einer beispielhaften Ausführungsform des erfindungsgemäßen Verfahrens wird die gereinigte Kunststoffmischung zunächst in einem Hydrozyklon 10 in zwei Fraktionen aufgetrennt. Dabei erfolgt die Auftrennung über die Dichteunterschiede der einzelnen Kunststoffe. Wenn das Ausgangsmaterial, wie dies für aus Müll zurückgewonnene Kunststoffmischungen durchaus typisch ist, aus etwa 60 bis 80 % Polyolefinen (davon ca. 10 % Polypropylen und der Rest Polyethylen), 10 bis 20 % Polystyrol, 5 bis 10 % PVC und dem Rest anderen Kunststoffen besteht, können aufgrund ihrer geringen Dichte (D < 1) die Polyolefine aus dem Oberlauf 12 des Hydrozyklons 10 abgezogen werden, während sich die restlichen Kunststoffe (D > 1) im Hydrozyklon absetzen und aus dem Unterlauf 14 nach unten hin abgeführt werden. Alternativ oder ergänzend zur Auftrennung der Kunststoffe im Hydrozyklon kann die Abtrennung des ersten Teils der Mischung auch in einer Vorrichtung erfolgen, die nach dem Schwimm/Sinkprinzip arbeitet, mit einer einstellbaren Dichte der Trägerflüssigkeit.

Das Polyolefin/Wasser-Gemisch aus dem Hydrozyklon 10 wird zu einer Siebmaschine 20 weitergeleitet, in der das Wasser abgetrennt und vorzugsweise wieder in den Kreislauf zurückgeführt wird. Das aus der Siebmaschine abgezogene Produkt besteht im Beispielsfall zu fast 99,9 % aus Polyolefinen.

Diese werden dann in einem mechanischen Trockner 30 getrocknet und anschließend einem Agglomerator 40 zugeführt, in dem die weitgehend aus flächigem Material bestehenden Polyolefinstücke angeschmolzen und zu Kügelchen geformt werden, um in einem späteren Verfahrensstadium eine bessere Mischbarkeit zu gewährleisten. An dieser Stelle können bevorzugt auch Festigkeitsträger zugesetzt werden, da im Agglomerator 40 gleichzeitig evtl. vorhandene Restfeuchte aus diesen Substanzen entzogen werden kann.

Die zweite Fraktion der Ausgangsmischung, die aus dem Hydrozyklon 10 über den Unterlauf 14 nach unten hin abgeführt worden ist, wird ebenfalls in einem mechanischen Trockner 50 getrocknet und anschließend einer Pulvermühle 60 zugeführt, in der das Material zu einer Korngröße von ca. 30 bis 80 µm zermahlen wird. Alternativ oder auch ergänzend dazu kann eine die Verträglichkeit beeinflussende Oberflächenbeschichtung aufgebracht werden.

Über ein Zwischensilo 70 wird dieses zermahlene und ggf. beschichtete Produkt mit der agglomerierten Polyolefin-Fraktion in einem Mischsilo 80 wieder zusammengeführt, in dem eine intensive Durchmischung erfolgt. Das aus dem Mischsilo 80 abziehbare, erfindungsgemäße Kunststoffgemisch kann bspw. den folgenden zwei Weiterverarbeitungsprozessen unterworfen werden.

Zum einen ist es möglich, dieses Gemisch über einen Fülltrichter 92 in einen Compoundierer 90 einzugeben, dort (wenn noch nicht im Agglomerator 40 geschehen) mit einem Festigkeitsträger, wie bspw. Altpapier, Steinwolle, Glasfaser, Aramid oder dergleichen oder Gemische derselben, und einem geeigneten Compatibilizer zu vermischen und in einen nachgeschalteten Granulator 94 zu einem Recyclat-Granulat zu verarbeiten.

Eine andere Möglichkeit besteht in einer direkten Weiterverarbeitung des erfindungsgemäßen Kunststoffgemisches zu Fertigprodukten. Dazu wird das erfindungsgemäße Gemisch zunächst einem weiteren Mischer 100 zugeführt und im beschriebenen Beispielfall mit geeigneten Festigkeitsträgern, wie oben angegeben, und einem geeigneten Compatibilizer, wie bspw. einem Block-Copolymer der Struktur Polystyrol/Polybutadien/Polystyrol in einer Menge von ca. 5 Gew.-% und ggf. einem Stoff zur Oberflächenkonditionierung des Fertigproduktes, wie bspw. einem Block-Copolymer der Struktur Polydimethylsiloxan mit hydrierten Butadienstyrol-Blöcken in einer Menge von ebenfalls ca. 5 Gew.-%, vermischt.

Dieses Gemisch wird dann über einen Fülltrichter 112 einem Extruder 110 zugeführt, in dem die Kunststoffmischung aufgeschmolzen wird. Anschließend erfolgt eine Ausformung über einen Düsenkopf 114, dem eine Kalibrier- und Kühleinheit 116 nachgeschaltet ist. Die im dargestellten Beispiel hergestellten Kunststoffprofile 120 werden über eine Abzugsvorrichtung 130 aus der Vorrichtung herausgezogen und einer Säge 134 zugeführt, in der sie auf entsprechende Stücklängen zugesägt werden.

Alternativ dazu kann das Gemisch aus dem Mischer 100 aber auch dem Compoundierer 90 mit nachgeschaltetem Granulator 94 zugeführt und dort zu einem Recyclat-Granulat weiterverarbeitet werden.

Bei der direkten Verarbeitung über einen Extruder können aus dem aufbereiteten Kunststoffgemisch bspw. Profile hergestellt werden, die zum einen hervorragende physikalische und mechanische Eigenschaften, wie hohe Biegefestigkeit, hervorragendes Temperaturverhalten usw., besitzen und zusätzlich durch die Einmischung des Block-Copolymeren eine vorkonditionierte Oberfläche besitzen, auf der problemlos alle Arten von Beschichtungen, Farben und Lacken anhaften. Die Schnittflächen dieser Profile zeigen ein visuell sehr einheitliches Bild, wie man es bisher nur von entsprechenden Produkten aus Neumaterial kannte. Eine entsprechende Weiterverarbeitung der Kunststoffmischungen ohne die dazwischen geschaltete erfindungsgemäße Aufbereitung führte hingegen zu völlig unbefriedigenden Ergebnissen.

## Patentansprüche

1. Verfahren zur Aufbereitung einer Kunststoffmischung, um ein Gemisch zu liefern, das in einem formgebenden Prozeß, wie beispielsweise durch Extrusion oder dergleichen, verarbeitet werden kann, wobei die als Ausgangsmaterial verwendete Kunststoffmischung in zwei im Hinblick auf solch eine Verarbeitung unverträgliche Kunststoffkomponenten unterteilt werden kann, dadurch gekennzeichnet, daß
von der als Ausgangsmaterial verwendeten Kunststoffmischung ein erster Teil, der aus einem im Hinblick auf die chemische Stoffgruppe im wesentlichen einheitlichen Material besteht, als erste Kunststoffkomponente abgetrennt und der verbleibende Teil als zweite Kunststoffkomponente einer Weiterbearbeitung, die zu einer Oberflächenvergrößerung und/oder Oberflächenveränderung der Bestandteile führt, unterworfen und anschließend dem ersten, abgetrennten Teil wieder zugeführt wird, woraufhin die Verarbeitung zu einem Gemisch stattfindet, wobei der zweite Teil der Mischung, der eine Art Füllstoff bildet, im ersten Teil der Mischung, die als ein Matrixmaterial fungiert, im wesentlichen gleichmäßig so verteilt wird, daß beim Verarbeiten des Gemisches in einem formgebenden Prozeß ein im wesentlichen einheitliches Produkt entsteht.

2. Verfahren nach Anspruch 1, dadurch gekennzeichnet, daß die Abtrennung des ersten Teils der Mischung zumindest teilweise in einem Hydrozyklon erfolgt.

3. Verfahren nach Anspruch 1 oder 2, dadurch gekennzeichnet, daß die Abtrennung des ersten Teils der Mischung zumindest teilweise in einer Vorrichtung erfolgt, die nach dem Schwimm/Sinkprinzip arbeitet, mit einer einstellbaren Dichte der Trägerflüssigkeit.

4. Verfahren nach einem der vorangehenden Ansprüche, dadurch gekennzeichnet, daß der erste abgetrennte Teil der Mischung vor Zusammenführung mit dem zweiten weiterbearbeiteten Teil der Mischung zur Oberflächenkonditionierung und/oder zum Restfeuchteentzug einer Zwischenbehandlung in einem Agglomerator unterworfen wird.

5. Verfahren nach einem der vorangehenden Ansprüche, dadurch gekennzeichnet, daß der zweite Teil der Mischung zu einem Mahlgut mit einer Korngröße von 10 bis 100 µm, vorzugsweise 30-50 µm, zermahlen wird.

6. Verfahren nach einem der vorangehenden Ansprüche, dadurch gekennzeichnet, daß die Bestandteile des zweiten Teils der Mischung mit einer Beschichtung überzogen werden.

7. Verfahren nach einem der vorangehenden Ansprüche, dadurch gekennzeichnet, daß ein Stoff oder eine Stoffzusammensetzung zugesetzt wird, der (die) bei der Weiterverarbeitung des Gemisches eine physikalische und/oder chemische Verknüpfung der an sich unverträglichen Kunststoffkomponenten im Gemisch bewirkt, und zwar in einer Menge von 2 bis 20 Gew.-%, bezogen auf die Gesamtmenge des Gemisches.

8. Verfahren nach Anspruch 7, dadurch gekennzeichnet, daß dieser Stoff oder diese Stoffzusammensetzung ausgewählt ist aus einer Gruppe von Stoffen, die in der Lage sind, über reaktionsfähige Endgruppen mit den aufbereiteten Kunststoffmaterialien Bindungen einzugehen.

9. Verfahren nach Anspruch 8, dadurch gekennzeichnet, daß ein Block-Copolymer der Struktur Polystyrol/Polybutadien/Polystyrol oder Polystyrol/Polyisopren/Polystyrol in einer Menge von ca. 2 bis 15 Gew.-%, vorzugsweise 5 Gew.-%, bezogen auf die Gesamtmenge des Gemisches, eingesetzt wird.

10. Verfahren nach einem der vorangehenden Ansprüche, dadurch gekennzeichnet, daß ein Stoff oder eine Stoffzusammensetzung zugesetzt wird, der (die) bei Weiterverarbeitung des Gemisches eine Oberflächenkonditionierung im Hinblick auf das Klebeverhalten und/oder das Aufbringen von Beschichtungen, wie Farb- oder Lackschichten, bewirkt, und zwar in einer Menge von 2 bis 10 Gew.-%, bezogen auf die Gesamtmenge des Gemisches.

11. Verfahren nach Anspruch 10, dadurch gekennzeichnet, daß der Stoff oder die Stoffzusammensetzung reaktionsfähige Endgruppen besitzt oder zu deren Ausbildung befähigt ist.

12. Verfahren nach Anspruch 11, dadurch gekennzeichnet, daß ein Block-Copolymer der Struktur Polydimethylsiloxan mit hydrierten Butadienstyrol-Blöcken in einer Menge von ca. 2 bis 10 Gew.-% eingesetzt wird.

13. Verfahren nach einem der vorangehenden Ansprüche, dadurch gekennzeichnet, daß Füllstoffe und/oder Festigkeitsträger zugesetzt werden.

14. Verfahren nach Anspruch 13, dadurch gekennzeichnet, daß als Festigkeitsträger ein Gemisch aus Altpapier, Steinwolle, Glasfaser und Aramid in einem bestimmten Mischungsverhältnis, vorzugsweise im Gewichtsverhältnis 18:50:30:2, eingesetzt wird.

15. Verfahren nach einem der vorangehenden Ansprüche, dadurch gekennzeichnet, daß zusätzliches Kunststoffmaterial zugesetzt wird, um ein vorbestimmtes Mischungsverhältnis der Kunststoffe im aufbereiteten Gemisch zu erzielen.

## Claims

1. A method of processing a mixture of plastics in order to obtain a mixture which can be processed by shaping or moulding, e.g. by extrusion or the like, wherein the starting plastic mixture can be divided into two plastic components which are incompatible in respect of such processing, characterised in that a first part of the plastic mixture used as the starting material, and consisting of material which belongs to a substantially uniform group of chemical substances, is separated as the first plastic component and the remaining part or second plastic component is additionally processed so as to increase the surface area and/or change the surface of the components, and is then added to the separated first part, followed by processing to form a mixture, wherein the second part of the mixture, which serves as a kind of filler, is substantially uniformly distributed in the first part of the mixture, which serves as a matrix material, so that a substantially uniform product is obtained when the mixture is processed by shaping or moulding.

2. A method according to claim 1, characterised in that separation of the first part of the mixture is effected at least partly in a hydrocyclone.

3. A method according to claim 1 or 2, characterised in that the first part of the mixture is separated at least partly in a device operating on the sink or swim principle, using a carrier liquid of adjustable density.

4. A method according to any of the preceding claims, characterised in that the first separated part of the mixture, before being combined with the second, additionally processed part of the mixture, is subjected to intermediate treatment in an agglomerator in order to process the surface and/or remove residual moisture.

5. A method according to any of the preceding claims, characterised in that the second part of the mixture is comminuted to a particle size of 10 to 100 µm, preferably 30 - 50 µm.

6. A method according to any of the preceding claims, characterised in that the components of the second part of the mixture are coated.

7. A method according to any of the preceding claims, characterised in that a substance or a composition of substances is added and, during further processing of the mixture, physically and/or chemically links the per se incompatible plastic components in the mixture, the substance or composition being added in a proportion of 2 to 20% by weight relative to the total mixture.

8. A method according to claim 7, characterised in that the substance or composition is selected from a group of substances which are capable of being bonded to the processed plastic materials via reactive end groups.

9. A method according to claim 8, characterised in that a block copolymer having the structure polystyrene/polybutadiene/polystyrene or polystyrene/polyisoprene/polystyrene is used in a proportion of about 2 to 15% by weight, preferably 5% by weight relative to the total mixture.

10. A method according to any of the preceding claims, charaacterised in that a substance or composition is added which, during further processing of the mixture, effects surface treatment with regard to the adhesiveness and/or application of coatings such as paint or varnish, the substance or composition being added in a proportion of 2 to 10% by weight relative to the total mixture.

11. A method according to claim 10, characterised in that the substance or composition contains or is capable of forming reacted end groups.

12. A method according to claim 11, characterised in that a block copolymer having the structure polydimethyl siloxane with hydrogenated butadiene styrene blocks is used in a proportion of about 2 to 10% by weight.

13. A method according to any of the preceding claims, characterised in that fillers and/or reinforcing substances are added.

14. A method according to claim 13, characterised in that the reinforcing substance is a mixture of waste paper, rock wool, glass fibres and aramid in a specific ratio, preferably in the ratio 18 : 50 : 30 : 2.

15. A method according to any of the preceding claims, characterised in that additional plastic material is added in order to obtain predetermined proportions of plastics in the processed mixture.

## Revendications

1. Procédé de préparation d'un mélange de matières plastiques afin de fournir un mélange pouvant être mis en oeuvre dans un processus de moulage, comme par exemple par extrusion ou similaire, le mélange de matières plastiques utilisé comme matière de départ pouvant être divisé en deux composants de matière plastique incompatibles pour une telle mise en oeuvre, caractérisé en ce que, dans le mélange de matières plastiques utilisé comme matière de départ, une première partie constituée d'une matière sensiblement homogène sur le plan du groupe de substances chimiques est séparée à titre de premier composant de matière plastique, et la partie restante est soumise, à titre de second composant de matière plastique, à un traitement ultérieur conduisant à un agrandissement de surface et/ou à une modification de surface et est ensuite remise en présence de la première partie séparée, après quoi intervient la transformation générant un mélange, la seconde partie du mélange, qui forme une sorte de matière de remplissage, étant répartie de manière sensiblement régulière dans la première partie du mélange qui fait fonction de matériau de matrice, de façon à obtenir un produit sensiblement homogène lors de la mise en oeuvre du mélange dans un processus de moulage.

2. Procédé selon la revendication 1, caractérisé en ce que la séparation de la première partie du mélange s'effectue au moins en partie dans un hydrocyclone.

3. Procédé selon la revendication 1 ou 2, caractérisé en ce que la séparation de la première partie du mélange s'effectue au moins en partie dans un dispositif fonctionnant selon le principe de flottation gravimétrique, la densité du liquide porteur étant réglable.

4. Procédé selon l'une des revendications précédentes, caractérisé en ce qu'avant d'être remise en présence de la seconde partie transformée du mélange en vue d'un conditionnement de surface et/ou d'une élimination de l'humidité résiduelle, la première partie, séparée, du mélange est soumise à un traitement intermédiaire dans un agglomérateur.

5. Procédé selon l'une des revendications précédentes, caractérisé en ce que la seconde partie du mélange est broyée pour obtenir une mouture d'une granulométrie de 10 à 100 µm, de préférence de 30 à 50 µm.

6. Procédé selon l'une des revendications précédentes, caractérisé en ce que les constituants de la seconde partie du mélange sont recouverts d'un revêtement.

7. Procédé selon l'une des revendications précédentes, caractérisé en ce qu'on ajoute, dans une proportion de 2 à 20 % en poids par rapport à la quantité totale du mélange, une substance ou une combinaison de substances qui, lors du traitement ultérieur du mélange, crée une liaison physique et/ou chimique entre les composants de matière plastique incompatibles du mélange.

8. Procédé selon la revendication 7, caractérisé en ce que cette substance ou cette combinaison de substances est choisie dans un groupe de substances capables, par l'intermédiaire de groupes terminaux réactifs, d'engendrer des liaisons avec les matières plastiques préparées.

9. Procédé selon la revendication 8, caractérisé en ce qu'un copolymère séquencé de structure polystyrène/polybutadiène/polystyrène ou polystyrène/polyisoprène/polystyrène est mis en oeuvre dans une proportion d'environ 2 à 15 % en poids, de préférence de 5 % en poids, par rapport à la quantité totale du mélange.

10. Procédé selon l'une des revendications précédentes, caractérisé en ce qu'on ajoute, dans une proportion de 2 à 10 % en poids par rapport à la quantité totale du mélange, une substance ou une combinaison de substances qui, lors du traitement ultérieur du mélange, crée un conditionnement de surface dans la perspective du collage et/ou de l'application de revêtements tels que des couches de peinture ou de vernis.

11. Procédé selon la revendication 10, caractérisé en ce que la substance ou la combinaison de substances possède des groupes terminaux réactifs ou est capable d'en former.

12. Procédé selon la revendication 11, caractérisé en ce qu'un copolymère séquencé de structure polydiméthylsiloxane avec séquences de budanièrestyrène est mis en oeuvre dans une proportion d'environ 2 à 10 % en poids.

13. Procédé selon l'une des revendications précédentes, caractérisé en ce que des matières de remplissage et/ou des agents de résistance mécanique sont ajoutés.

14. Procédé selon la revendication 13, caractérisé en ce que l'agent de résistance mécanique mis en oeuvre est un mélange composé de vieux papiers, de laine minérale, de fibre de verre et d'aramide selon une proportion de mélange déterminée, de préférence dans un rapport pondéral de 18:50:30:2.

15. Procédé selon l'une des revendications précédentes, caractérisé en ce qu'une matière plastique supplémentaire est ajoutée afin d'obtenir une proportion prédéterminée de mélange des matières plastiques dans le mélange fini.
